# EUROPÄISCHE PATENTANMELDUNG

(11) **EP 1 293 152 A2**
(43) Veröffentlichungstag der Anmeldung: **19.03.2003**
(21) Anmeldenummer: 02019410.6
(22) Anmeldetag: 30.08.2002
(51) Int. Cl.: A47C 7/46

(54) **Polster für Sitze, insbesondere Fahrzeugsitze**

(30) Priorität: 15.09.2001 DE 10145627
(71) Anmelder: DaimlerChrysler AG, 70567 Stuttgart (DE)
(72) Erfinder: Dinkel, Emil, 71272 Renningen (DE); Günther, Ewald, 71034 Böblingen (DE); Schrader, Jürgen, 71093 Weil im Schönbuch (DE)

(57) **Zusammenfassung**

Die Erfindung betrifft ein Polster für Sitze, insbesondere Fahrzeugsitze, mit einem die Kontur der Polsteroberfläche vorgebenden Polsterkörper und Mitteln zum Verändern der Polsteroberflächenkontur. Zwecks Einstellen der Polsteroberflächenkontur für eine individuelle, orthopädisch richtige Körperabstüzung des Sitzenden unter Vermeidung einer den Sitzkomfort beeinträchtigenden Verhärtung der Polsteroberfläche ist der Polsterkörper zumindest in Teilbereichen aus mehreren, nebeneinander angeordneten, einzelnen Polstersegmenten zusammengesetzt, die in Richtung der Normalen der Polsteroberfläche relativ zueinander verschiebbar sind. Die Mittel zum Verändern der Polsteroberflächenkontur weisen Einstellglieder auf, die die Polsterelemente einzeln verschieben.

## Beschreibung

Die Erfindung betrifft ein Polster für Sitze, insbesondere Fahrzeugsitze, gemäß dem Oberbegriff des Patentanspruchs 1.

Bei einem bekannten Sitz- und/oder Rückenlehnenpolster für Sitze in Kraftfahrzeugen und Flugzeugen (DE 1 871 717 U1) sind im Polsterbereich der Sitzfläche des Sitzkissens und/oder der Rückenlehne luftgefüllte flexible Wülste mit einer vorgegebenen Form integriert, die über ventilgesteuerte Leitungen an einer Druckluftpumpe zum Einleiten von Luft angeschlossen sind. Durch mehr oder weniger starkes Aufblasen der Wülste läßt sich die Form der Polsteroberfläche verändern und so eine individuelle Körperunterstützung des Sitzenden in bestimmten Polsterbereichen erzielen.

Bei einem bekannten Fahrzeugsitz mit einem die Form der Oberfläche vorgebenden Polsterkörper (DE 33 34 864 C2) sind zur Korrektur des Sitzprofils zwecks orthopädisch richtiger Abstützung des Sitzenden mehrere aufblasbare Elemente vorhanden, die im aufgeblasenen Zustand die Form der Sitzoberfläche verändern. Die aufblasbaren Elemente sind in zur Oberfläche hin offenen, im übrigen allseitig durch den Polsterkörper begrenzten Vertiefungen angeordnet, deren Tiefe annähernd gleich der Dicke der unaufgeblasenen Elemente ist. Die nebeneinanderliegenden Vertiefungen sind durch Stützrippen voneinander getrennt. Der Polsterkörper samt aufblasbare Elemente ist von einem Polsterbezug überspannt.

Ein bekanntes Sitz- und/oder Rückenlehnenpolster für einen Stuhl oder Sessel (DE 23 48 124 A1) ist aus mehreren, ein Raster mit Querreihen bildenden und mit Luft füllbaren Polsterelementen zusammengesetzt, von denen mindestens ein Teil über Druckventile enthaltende Leitungen miteinander verbunden sind. Infolge der bei einer Veränderung der Körperhaltung des Sitzenden eintretenden Lageänderung des Gesäßes und der damit einhergehenden Gewichtsverlagerung werden bestimmte Polsterelemente mehr als andere belastet, wobei dann aufgrund der gegenseitigen Verbindung der Innenräume bestimmter Polsterelemente das aus den einer stärkeren Belastung unterliegenden Polsterelementen verdrängte Luftvolumen in die mit diesen kommunizierenden weniger belasteten Polsterelemente gelangen und sie entsprechend stärker aufweiten. Auf diese Weise kommt schließlich die zur erwünschten Fixierung der neu eingenommen Körperhaltung erforderliche Gesäßstabilisierung zustande. Anstelle von Luft kann auch ein anderes gasförmiges oder fluides Medium verwendet werden.

Alle diese Polster mit der Möglichkeit der Veränderung der Oberflächenkontur zur orthopädisch optimalen Abstützung des Sitzenden haben den Nachteil, daß sich durch die Erhöhung des Mediumfülldrucks in den Wülsten oder Polsterelementen die Sitzoberfläche verhärtet und dadurch der Sitzkomfort beeinträchtigt wird.

Der Erfindung liegt die Aufgabe zugrunde, ein Polster der eingangs genannten Art so zu verbessern, daß eine Einstellung der Oberflächenkontur in Anpassung an eine gewünschte Körperunterstützung des Sitzenden ohne Verhärtung der Polsteroberfläche durchführbar ist.

Die Aufgabe ist erfindungsgemäß durch die Merkmale des Patentanspruchs 1 gelöst.

Das erfindungsgemäße Polster hat den Vorteil, daß bei der gewünschten Einstellung der Oberflächenkontur die Weichheit des Polster erhalten bleibt, weil jedes Polstersegment ohne jegliche Formänderung in seine Gesamtheit verschoben wird. Die Polstersegmente sind dabei entweder im gesamten Polster angeordnet oder nur in solchen Teilbereichen des Polsters, in denen spezifische Einstellungen der Polsteroberfläche erforderlich sind. So kann beispielsweise der hintere Teil des Polsterspiegels mit einem unverschieblichen Polstersegment realisiert werden, während der vordere, bis zum Polsterrand reichende Teil des Polsterspiegels aus mehreren verschieblichen Polstersegmenten zusammengesetzt ist. Damit können z.B. die unter den Oberschenkeln liegenden Polstersegmente separat eingestellt werden, um unterschiedlichen Anforderungen an die Beinhaltung zu genügen, so z.B. bei Vorhandensein eines Automatikgetriebes im Kraftfahrzeug eine andere Stellung des das Gaspedal bedienenden Beins gegenüber dem abgestellten, funktionslosen Bein vorzugeben.

Vorteilhafte Ausführungsformen des erfindungsgemäße Polsters mit zweckmäßigen Weiterbildungen und Ausgestaltungen der Erfindung sind in den weiteren Patentansprüchen angegeben.

Gemäß einer bevorzugten Ausführungsform der Erfindung ist an der Unterseiten eines jeden verschiebbaren Polstersegments ein steifer Boden angeordnet, an dem die die Polstersegmente einzeln verschiebenden Einstellglieder jeweils angreifen. Durch diesen steifen Boden wird die von den Einstellgliedern aufgebrachte Verschiebekraft gleichmäßig über das Polstersegment verteilt, so daß es durch die Verschiebekraft nicht zu einer punktuellen Verhärtung des weichen Polstermaterials innerhalb des Polstersegments kommt.

Gemäß einer vorteilhaften Ausführungsform der Erfindung ist der Polsterkörper mit einer oberen Polsterschicht aus einem Polsterwerkstoff überdeckt und die Polsterschicht von einem Polsterbezug überspannt. Die obere Polsterschicht ist lose auf dem Polsterkörper abgeheftet, was dadurch bewirkt wird, daß die obere Polsterschicht am Polsterbezug vernäht und der Polsterbezug elastisch an dem den Polsterkörper aufnehmenden Polsterträger verspannt ist. Durch diese Maßnahme wird die Bewegung der einzelnen Polstersegmente möglich und führt nicht zu einer Vergrößerung der Polsterspannung. Die elastische Verspannung kann entweder über Gummibänder oder über eine im Polsterbezug vorgesehene Randzone aus einem flexiblen Material erfolgen.

Die Erfindung ist anhand von in der Zeichnung dargestellten Ausführungsbeispielen im folgenden näher beschrieben. Es zeigen jeweils in schematischer Darstellung:
- Fig. 1: eine perspektivische Ansicht eines Fahrzeugsitzes,
- Fig. 2: ausschnittweise einen Schnitt längs der Linie II - II in Fig. 1,
- Fig. 3: ausschnittweise einen Schnitt längs der Linie III - III in Fig. 1,
- Fig. 4: ausschnittweise eine Querschnitt eines Fahrzeugsitzes gemäß einem weiteren Ausführungsbeispiel,
- Fig. 5: eine perspektivische Darstellung eines Ausschnitt des Sitzpolsters des Fahrzeugsitzes in Fig. 4.

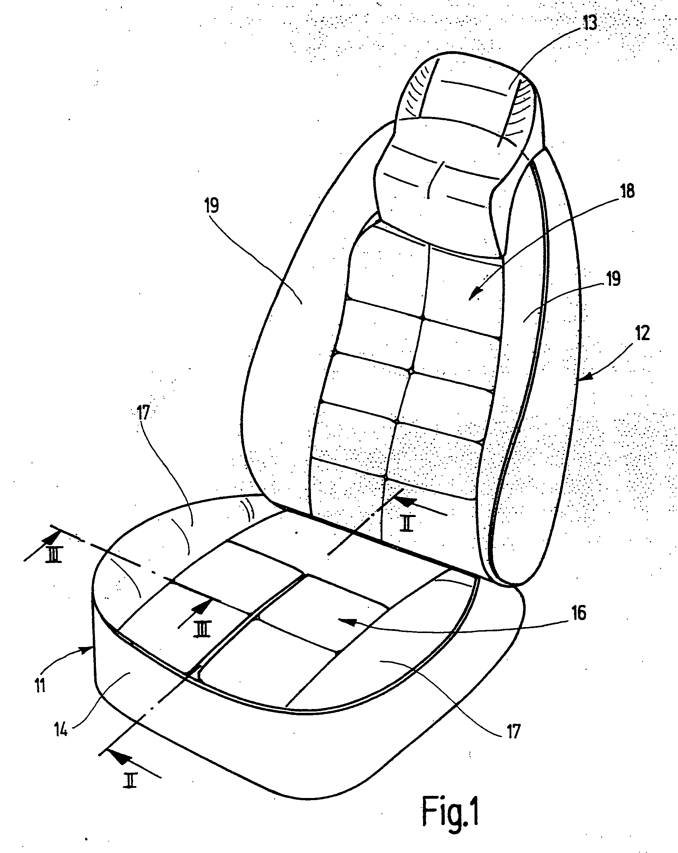

Der in Fig. 1 perspektivisch dargestellte Fahrzeugsitz für einen Personenkraftwagen weist in bekannter Weise ein Sitzkissen 11, eine Rückenlehne 12 und eine an der Rückenlehne 12 höhenverstellbar gehaltene Kopfstütze 13 auf. Das Sitzkissen 11 ist in einem in Fig. 1 nicht zu sehenden Sitzgestell aufgenommen, und die Rückenlehne 12 ist schwenkbar am Sitzgestell gehalten, so daß sie in ihrer Neigung gegenüber dem Sitzkissen 11 einstellbar ist. Das Sitzkissen 11 weist ein Sitzpolster 14 und die Rückenlehne 12 weist ein in einem Lehnengestell aufgenommenes Lehnenpolster 15 auf. Die Polsteroberfläche des Sitzpolsters 14 weist einen Sitzspiegel 16 auf, an dessen Längskanten sich sog. Seitenbacken 17 oder Seitenwangen zur seitlichen Körperabstützung bei Auftreten von Querkräften erstrecken. In gleicher Weise zeigt das Lehnenpolster 15 einen Lehnenspiegel 18, der von ebenfalls der seitlichen Körperabstützung dienenden Seitenwülsten 19 umrahmt ist. Der Aufbau von Sitzpolster 14 und Lehnenpolster 15 ist nahezu gleich, so daß nachfolgend lediglich das Sitzpolster 14 im einzelnen beschrieben wird, die Ausführungen aber in gleicher Weise für das Lehnenpolster 15 gelten.

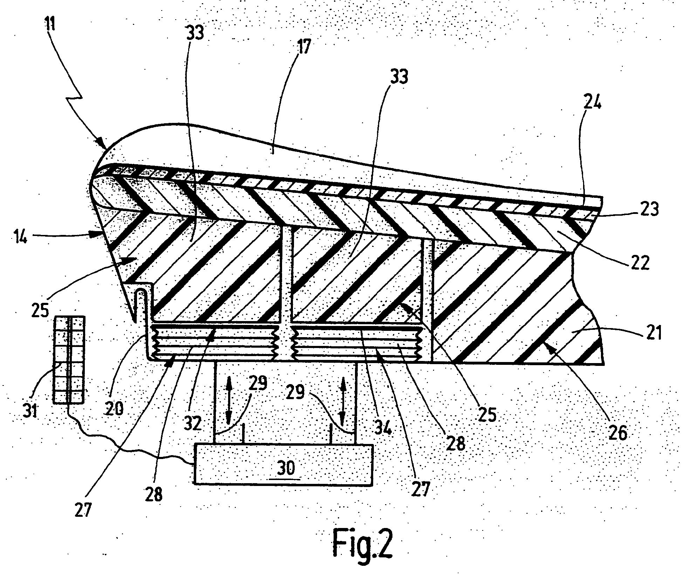

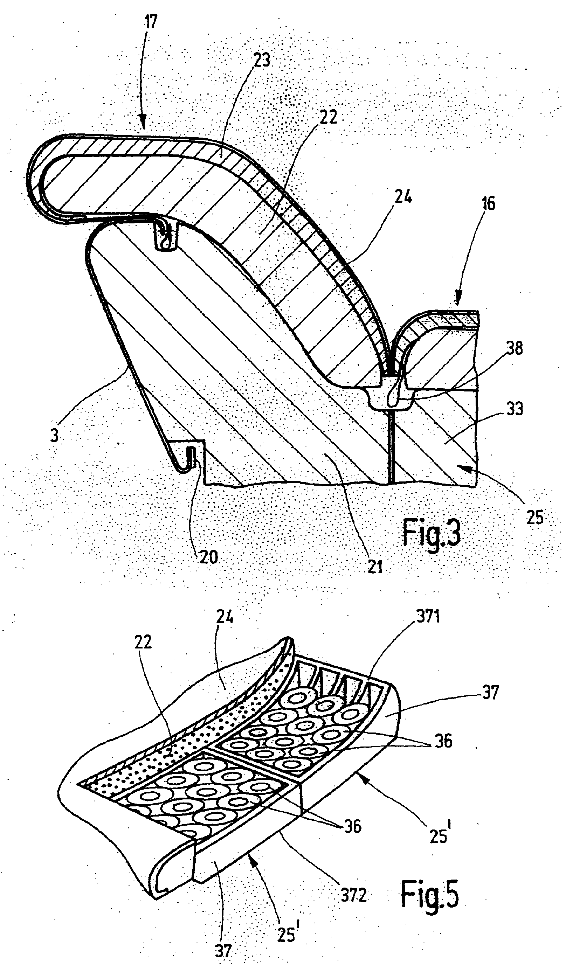

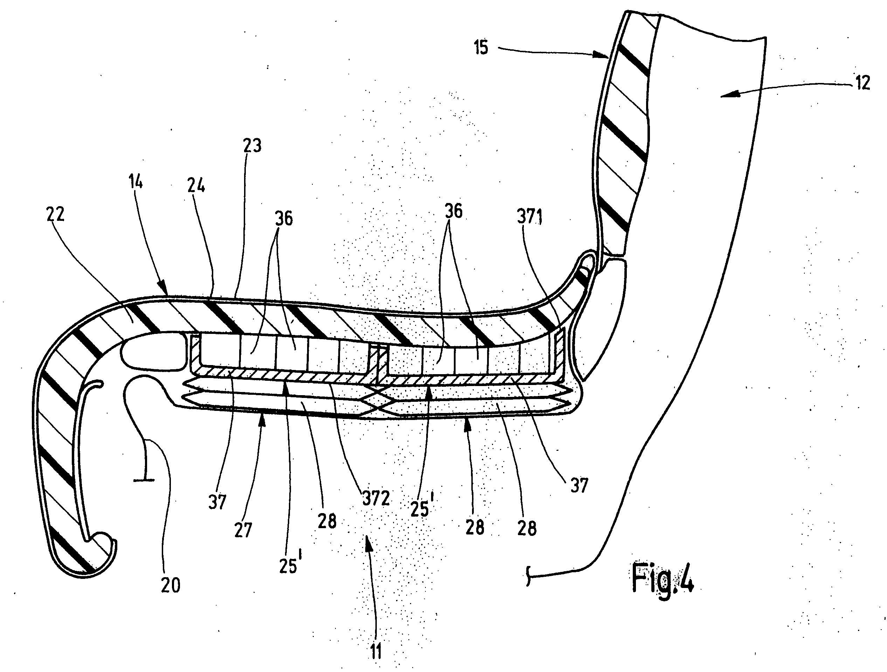

Das Sitzpolster 14 ist jeweils ausschnittweise in Fig. 2 im Längsschnitt gemäß Schnittlinie II - II in Fig. 1 und in Fig. 3 im Querschnitt gemäß Schnittlinie III - III in Fig. 1 dargestellt. Das Sitzpolster 14 weist einen die Kontur der Polsteroberfläche vorgebenden Polsterkörper 21, der auf einem Polsterträger 20 aufliegt, eine den Polsterkörper 21 überdeckende Druckverteilungsschicht 22, eine auf der Druckverteilungsschicht 22 aufliegende obere Polsterschicht 23, auch Bezugsfüllung genannt, und einen über die Polsteroberfläche gespannten Polsterbezug 24 auf, der randseitig am Polsterträger 20 festgespannt ist. Bei einem aktiv belüfteten Polster ist zwischen dem Polsterkörper 21 und der Druckverteilungsschicht 22 noch eine Ventilationsschicht aus einem grobmaschigen Abstandsgewirke vorhanden. Der Polsterkörper 21 besteht aus Vollschaum, die Druckverteilungsschicht 22 aus gelochtem Schaum, die obere Polsterschicht 23 aus einem Vlies oder rektikuliertem Schaum und der Polsterbezug aus Leder oder Stoff.

Wie aus Fig. 2 zu erkennen ist, ist der Polsterkörper 21 im Bereich des Sitzspiegels 16 aus mehreren, nebeneinander angeordneten, einzelnen Polstersegmenten 25, 26 zusammengesetzt, von denen die Polstersegmente 25 zueinander und zu dem Polstersegment 26 verschiebbar sind. Das feststehende Polstersegment 26 ist in dem an die Rückenlehne 12 angrenzenden Spiegelbereich des Sitzpolsters 14 und die verschiebbaren Polstersegmente 25 in dem bis zur Vorderkante des Sitzpolsters 14 reichenden Teils des Sitzspiegels 16 angeordnet, wobei insgesamt vier Polstersegmente 25 diesen Teil des Sitzspiegels 16 ausfüllen. Die Verschiebung der Polstersegmente 25 in Richtung der Normalen zur Polsteroberfläche wird mittels Einstellgliedern 27 bewirkt, die an der Unterseite der Polstersegmente 25 angeordnet sind. In den hier beschriebenen Ausführungsbeispielen sind die Einstellglieder 27 als Bälge 28 ausgebildet, die sich einerseits am Polsterträger 20 und andererseits an jedem Polstersegment 25 abstützen. Die Bälge 28 sind mit einem fluiden oder gasförmigen Medium, z.B. Luft, gefüllt, das über eine Leitung 29 von einem Mediumspeicher 30 eingespeist wird. Durch Vergrößern der Füllmenge in den Bälgen 28 dehnen diese sich aus und verschieben das jeweilige Polstersegment 25 in Richtung Oberfläche des Sitzpolsters 14. Die Größe der Verschiebung kann dabei mittels eines Steuergeräts 31 eingestellt werden, indem z.B. der Mediumspeicher 30 solange angesteuert wird, bis die gewünschte Höheneinstellung des jeweiligen Polstersegments 25 erreicht ist. Danach wird durch entsprechende Absperrventile die in den Bälgen 28 eingesteuerte Füllmenge konstant gehalten. Alternativ ist es möglich, die einzelnen Polstersegmente 25 in gleicher Weise elektromotorisch zu verstellen.

Um beim Verschieben der Polstersegmente 25 eine gleichmäßige Kraftverteilung an jedem Polstersegment 25 zu erreichen, ist zwischen der Unterseite eines jeden Polstersegments 25 und den dazugehörigen Einstellgliedern 27 in Form eines Balges 28 ein steifer Boden 32 angeordnet. Durch diesen steifen Boden 32 wird bei Verschiebekrafteinwirkung das aus dem weichen Polstermaterial bestehende Polstersegment 25 insgesamt verschoben, so daß es durch die Verschiebung nicht zu einer punktuellen Verhärtung des weichen Polstermaterials kommen kann, was wiederum zu einer Verhärtung der Polsteroberfläche und damit zu einer Einbuße des Sitzkomforts führen würde.

Im Ausführungsbeispiel der Fig. 2, besteht jedes Polstersegment 25 aus einem Vollblock 33 aus Schaum oder Gummihaar. Der steife Boden 32 wird von einer Platte 34 gebildet, auf der der Vollblock 33 aufliegt. Der Balg 28 stützt sich zwischen der Platte 34 und dem Polsterträger 20 ab.

Zur Einstellung einer gewünschten, für eine orthopädisch günstige Körperabstützung des Sitzenden vorteilhafte Kontur des Sitzpolsters 14 werden durch z.B. manuelle Bedienung des Steuergeräts 31 die verschiebbaren Polstersegmente 25 individuell angehoben. Beispielsweise kann durch unterschiedliches Anheben der vier vorderen Polstersegmente 25 im Sitzspiegel 16 eine unterschiedliche Unterstützung der Oberschenkel des Sitzenden erzielt werden, um den unterschiedlichen Belangen für das zum Fahren mit Automatikgetriebe funktionale Bein und für das nicht funktionale Bein zu erzielen.

Um beim Verschieben der verschiedenen Polstersegmente 25 zu verhindern, daß sich eine Polsterspannung aufbaut, die den Sitzkomfort beeinträchtigt, ist für den Polsterbezug 24 eine spezielle Abheftung vorgesehen, die gewährleistet, daß die einzelnen Polstersegmente 25 so bewegt werden können, daß das Sitzpolster 14 insgesamt nicht verhärtet und jedes beliebige Abheft- oder Designbild dargestellt werden kann. Wie Fig. 3 zeigt, ist die obere Polsterschicht 23 lose auf dem Polsterkörper 21 abgeheftet, wozu die obere Polsterschicht 23 am Polsterbezug 24 vernäht und der Polsterbezug 24 elastisch am Polsterträger 20 verspannt ist. Die elastische Verspannung kann entweder über Gummibänder oder über am Polsterbezug 24 umlaufende Randzonen aus einem flexiblen Werkstoff erfolgen. Beispielsweise kann der Polsterbezug 24 mit einem Randstreifen 35 aus einem Stretchmaterial vernäht sein. Die Abheftung erfolgt in bekannter Weise mittels auf dem Polsterbezung 24 aufgenähter Schlaufen 38 im Polsterkörper 21.

Der in Fig. 4 ausschnittweise im Längsschnitt dargestellte Fahrzeugsitz ist bezüglich seines Sitzpolsters 14 gegenüber dem beschriebenen Fahrzeugsitz modifiziert. Hier ist das Sitzpolster 14 im Bereich des Sitzspiegels 16 komplett aus verschieblichen Polstersegmenten 25' zusammengesetzt, die von jeweils einem Einstellglied 27 in Form eines Balges 28 in Richtung zur Polsteroberfläche verschiebbar sind. Im Gegensatz zu den Polstersegmente 25 gemäß Fig. 1, die dort als Vollblöcke ausgebildet sind, ist jedes Polstersegment 25' aus einer Mehrzahl von Formstücken 36 aus Schaum oder Gummihaar zusammengesetzt, die nebeneinander angeordnet sind. Die Formstücke 36 sind in einen zur Polsteroberfläche hin offenen steifen Kasten 37 eingesetzt, und zwar so, daß sie etwas über den Kastenrand 371 überstehen. Zwischen dem Kastenboden 372 eines jeden Kastens 37 und dem Polsterträger 20 ist wiederum ein als Balg 28 ausgebildetes Einstellglied 27 angeordnet. Die Formstücke 36 sind als Voll- oder Hohlzylinder ausgebildet und mit rechtwinklig zum Kastenboden 372 ausgerichteten Zylinderachsen in den Kasten 37 eingesetzt. Die in Fig. 4 im Schnitt zu sehenden Polstersegmente 25' sind in Fig. 5 perspektivisch dargestellt. Hier sind die Formstücke 36 als Hohlzylinder ausgeführt. Im übrigen stimmt der Polsteraufbau mit dem Aufbau des zur Fig. 1 bis 3 beschriebenen Sitzpolsters 14 überein, so daß insoweit gleiche Bauteile mit gleichen Bezugszeichen versehen sind.

## Patentansprüche

1. Polster für Sitze, insbesondere Fahrzeugsitze, mit einer Polsteroberfläche, einen die Kontur der Polsteroberfläche vorgebenden Polsterkörper (21) und Mittel zum Verändern der Polsteroberflächenkontur,
**dadurch gekennzeichnet,**
**daß** der Polsterkörper (21) zumindest in Teilbereichen aus mehreren, nebeneinander angeordneten, einzelnen Polstersegmenten (25, 25') zusammengesetzt ist, die in Richtung der Normalen der Polsteroberfläche relativ zueinander verschiebbar sind, und daß die Mittel zum Verändern der Polsteroberflächenkontur die Polstersegmente (25; 25') einzeln verschiebende Einstellglieder (27) aufweisen.

2. Polster nach Anspruch 1,
**dadurch gekennzeichnet,**
**daß** an der Unterseite eines jeden verschiebbaren Polstersegments (25) ein steifer Boden (32) angeordnet ist und daß die Einstellglieder (27) jeweils am Boden (32) angreifen.

3. Polster nach Anspruch 1 oder 2,
**dadurch gekennzeichnet,**
**daß** jedes Polstersegment (25) ein Vollblock (33) aus einem Polsterwerkstoff ist und daß der steife Boden (32) als Platte (34) ausgebildet ist, auf der der Vollblock (33) aufliegt.

4. Polster nach Anspruch 1 oder 2,
**dadurch gekennzeichnet,**
**daß** jedes Polstersegment (25') eine Mehrzahl von nebeneinander angeordneten Formstücken (36) aus einem Polsterwerkstoff aufweist und daß der steife Boden (32) von einem auf seiner zur Polsteroberfläche weisenden Seite offenen Kasten (37) gebildet ist, in dem die Formstücke (36) so eingesetzt sind, daß sie über den Kastenrand (371) überstehen.

5. Polster nach Anspruch 4,
**dadurch gekennzeichnet,**
**daß** die Formstücke (36) Voll- oder Hohlzylinder sind, die mit rechtwinklig zum Kastenboden (372) ausgerichteten Zylinderachsen in den Kasten (37) eingesetzt sind.

6. Polster nach einem der Ansprüche 3 - 5,
**dadurch gekennzeichnet,**
**daß** der Polsterwerkstoff ein Schaum oder Gummihaar ist.

7. Polster nach einem der Ansprüche 1 - 6,
**dadurch gekennzeichnet,**
**daß** die Einstellglieder (27) als mit einem fluiden oder gasförmigen Medium gefüllte, flexible Bälge (28) ausgebildet sind, die sich jeweils zwischen einem Polstersegment (25; 25') und einem den Polsterkörper (21) aufnehmenden Polsterträger (20) abstützen und an einer Steuervorrichtung (30, 31) zum Verändern ihres Füllvolumens angeschlossen sind.

8. Polster nach einem der Ansprüche 1 - 6,
**dadurch gekennzeichnet,**
**daß** die Einstellglieder (27) von steuerbaren elektrischen Stellmotoren gebildet sind.

9. Polster nach einem der Ansprüche 1 - 8,
**dadurch gekennzeichnet,**
**daß** der Polsterkörper (21) mit einer oberen Polsterschicht (23) aus einem Polsterwerkstoff, vorzugsweise einem Vlies oder einem rektikulierten Schaum, überdeckt und die obere Poisterschicht (23) von einem Polsterbezug (24) überspannt ist und daß die obere Polsterschicht (234) lose auf dem Polsterkörper (21) abgeheftet ist.

10. Polster nach Anspruch 9,
**dadurch gekennzeichnet,**
**daß** die obere Polsterschicht (23) am Polsterbezug (24) vernäht und der Polsterbezug (24) elastisch am Polsterträger (20) verspannt ist.

11. Polster nach Anspruch 10,
**dadurch gekennzeichnet,**
**daß** der Polsterbezug (24) zumindest eine umlaufende Randzone (35) aus einem flexiblen Werkstoff aufweist.
